# FASCICULE DE BREVET EUROPEEN

(11) **EP 1 682 835 B1**
(45) Date de publication et mention de la délivrance du brevet: **11.09.2013**
(21) Numéro de dépôt: 04805745.9
(22) Date de dépôt: 14.10.2004
(51) Int. Cl.: F25J 3/02, C01B 3/50, C01B 31/18

(54) **PROCEDE ET APPAREIL POUR LA PRODUCTION DE MONOXYDE DE CARBONE ET/OU D'HYDROGENE ET/OU D'UN MELANGE D'HYDROGENE ET DE MONOXYDE DE CARBONE PAR DISTILLATION CRYOGENIQUE**
VERFAHREN UND VORRICHTUNG ZUR HERSTELLUNG VON KOHLENMONOXID UND/ODER WASSERSTOFF UND/ODER EINEM GEMISCH AUS WASSERSTOFF UND KOHLENMONOXID DURCH KRYOGENE DESTILLATION
METHOD AND APPARATUS FOR THE PRODUCTION OF CARBON MONOXIDE AND/OR HYDROGEN AND/OR A MIXTURE OF HYDROGEN AND CARBON MONOXIDE BY CRYOGENIC DISTILLATION

(30) Priorité: 20.10.2003 FR 0350706
(43) Date de publication de la demande: 26.07.2006
(73) Titulaire: L'AIR LIQUIDE, Société Anonyme pour l'Etude et l'Exploitation des Procédés Georges Claude, 75007 Paris (FR)
(72) Inventeur: BRIGLIA, Alain, F-49140 Corze (FR)
(74) Mandataire: Mercey, Fiona Susan
(86) Numéro de dépôt international: PCT/FR2004/050502
(87) Numéro de publication internationale: WO 2005/040704

(56) Documents cités:
- EP-A- 0 289 877
- EP-A- 0 790 212
- FR-A- 2 832 398
- FR-A- 2 838 424
- US-A- 5 351 491

## Description

La présente invention est relative à un procédé et à une installation pour la production de monoxyde de carbone et/ou d'hydrogène et/ou d'un mélange d'hydrogène et de monoxyde de carbone par distillation cryogénique, conformément aux préambules des revendications 1 et 13 respectivement et connu du document EP-A-0289 877.

De tels procédés sont couramment alimentés par un mélange gazeux contenant du monoxyde de carbone, de l'hydrogène, de l'azote, du méthane et d'autres impuretés provenant d'une unité de production telle qu'un reformeur, une unité d'oxydation partielle ou une autre unité pour la production de gaz de synthèse.

Le mélange gazeux est séparé dans une unité de distillation cryogénique pour former du monoxyde de carbone et/ ou de l'hydrogène et/ou un mélange de ces deux gaz, par exemple avec un rapport hydrogène : monoxyde de carbone différent de celui du mélange d'alimentation.

Ullmann's Encyclopedia of Industrial Chemistry, 5ème édition, Volume A12, page 271 décrit un procédé de lavage au méthane dans lequel une partie du monoxyde de carbone est recyclé en permanence comme reflux à la colonne de séparation de monoxyde de carbone et de méthane.

L'unité de distillation cryogénique est limitée dans la mesure où elle ne peut fonctionner quand la quantité de gaz d'alimentation tombe en dessous d'une valeur donnée. Ainsi, si de petites quantités de produit sont requises, l'unité fonctionne avec le débit de gaz d'alimentation minimal possible et les excédents des produits sont mis à l'air et brûlés. Il est possible de réduire la charge minimale de fonctionnement de l'unité en remplaçant les plateaux de distillation par des garnissages structurés. Or, même avec les garnissages, la réduction de charge maximale possible reste dans le voisinage de 50%.

Tout en réduisant les effets néfastes de ces pratiques, la présente invention vise à opérer l'unité de distillation cryogénique avec plus d'efficacité et améliorant les aspects environnementaux.

Selon un objet de l'invention, il est prévu un procédé pour la production de monoxyde de carbone et/ou d'hydrogène et/ou d'un mélange d'hydrogène et de monoxyde de carbone par distillation cryogénique selon la revendication 1.

Selon d'autres aspects facultatifs :
- le mélange d'alimentation contient jusqu'à 10% molaires de méthane et/ou jusqu'à 10% molaires d'azote et/ou jusqu'à 10% molaires d'autres impuretés ;
- un (le) gaz de recyclage contient au minimum 5% mol. de monoxyde de carbone ;
- un (le) gaz de recyclage contient au minimum 25% mol. d'hydrogène ;
- au moins un gaz de recyclage est recyclé uniquement pendant le deuxième mode d'opération quand le besoin d'un des produits tombe en dessous d'un seuil ;
- l'unité de séparation contient une colonne de lavage au méthane et/ou une colonne de lavage à l'azote et/ou une colonne de lavage au monoxyde de carbone et/ou une colonne d'épuisement et/ou une colonne de distillation ;
- la composition et/ou le débit du mélange d'alimentation produit par l'appareil de production est modifiée pendant le deuxième mode d'opération de sorte que la composition en monoxyde de carbone de la deuxième quantité de mélange d'alimentation baisse si le gaz de recyclage est plus riche en monoxyde de carbone que la première quantité de mélange d'alimentation et/ou de sorte que la composition en monoxyde de carbone de la deuxième quantité de mélange d'alimentation augmente si le gaz de recyclage est moins riche en monoxyde de carbone que la première quantité de mélange d'alimentation ;
- la composition du mélange d'alimentation produit par l'appareil de production est modifiée pendant le deuxième mode d'opération de sorte que la composition en hydrogène de la deuxième quantité de mélange d'alimentation baisse si le gaz de recyclage est plus riche en hydrogène que la première quantité de mélange d'alimentation et/ou de sorte que la composition en hydrogène de la deuxième quantité de mélange d'alimentation augmente si le gaz de recyclage est moins riche en hydrogène que la première quantité de mélange d'alimentation ;
- la composition et/ou le débit du mélange d'alimentation produit par l'appareil de production est modifiée pendant le deuxième mode d'opération de sorte que le débit du mélange d'alimentation rentrant dans l'unité de séparation ne diffère pas du débit envoyé pendant le premier mode de plus que 50%, de préférence de plus que 30% ;
- la composition et/ou le débit du mélange d'alimentation produit par l'appareil de production est modifiée pendant le deuxième mode d'opération de sorte que la teneur en monoxyde de carbone du mélange d'alimentation rentrant dans l'unité de séparation ne diffère pas la teneur en monoxyde de carbone du mélange d'alimentation rentrant dans l'unité de séparation envoyé pendant le premier mode de plus ou moins 5% mol., de préférence de plus ou moins 3% mol ;
- la composition et/ou le débit du mélange d'alimentation produit par l'appareil de production est modifiée pendant le deuxième mode d'opération de sorte que la teneur en hydrogène du mélange d'alimentation rentrant dans la boîte froide ne diffère pas la teneur en hydrogène du mélange d'alimentation rentrant dans la boîte froide envoyé pendant le premier mode d'opération de + ou -10% ;
- la composition et/ou le débit du mélange d'alimentation produit par appareil de production est modifiée pendant le deuxième mode d'opération en modifiant le fonctionnement de l'appareil de production ;
- on modifie le fonctionnement de l'appareil de production par les moyens suivants :
   i) en variant le rapport de vapeur carbone dans le cas où l'appareil de production comprend un reformeur de méthane à la vapeur et/ou
   ii) en variant la température d'opération d'au moins un élément de l'appareil, éventuellement la température de réaction du reformeur et/ou
   iii) en variant le débit de dioxyde de carbone recyclé d'un appareil d'épuration en dioxyde de carbone vers un reformeur et/ou
   iv) en variant un débit alimentant l'appareil de production et/ou
   v) en variant le rapport oxygène/carbone (dans le cas où l'appareil de production fonctionne par oxydation partielle).

Selon un autre aspect de l'invention, il est prévu une installation de production d'hydrogène et/ou de monoxyde de carbone et/ou d'un mélange d'hydrogène et de monoxyde de carbone selon la revendication 13.

Selon d'autres aspects facultatifs, l'installation comprend ;
- des moyens pour détecter la composition et le débit d'au moins un gaz de recyclage et du mélange d'alimentation ;
- des moyens pour déclencher le recyclage d'au moins un gaz de recyclage si le besoin de produit réduit en dessous d'un seuil et des moyens pour arrêter le recyclage du au moins un gaz de recyclage si le besoin du même produit augmente au delà d'un seuil (du seuil).

Ceci permet également de réduire le débit de gaz d'alimentation envoyé à l'unité de distillation si les besoins de produits sont réduits.

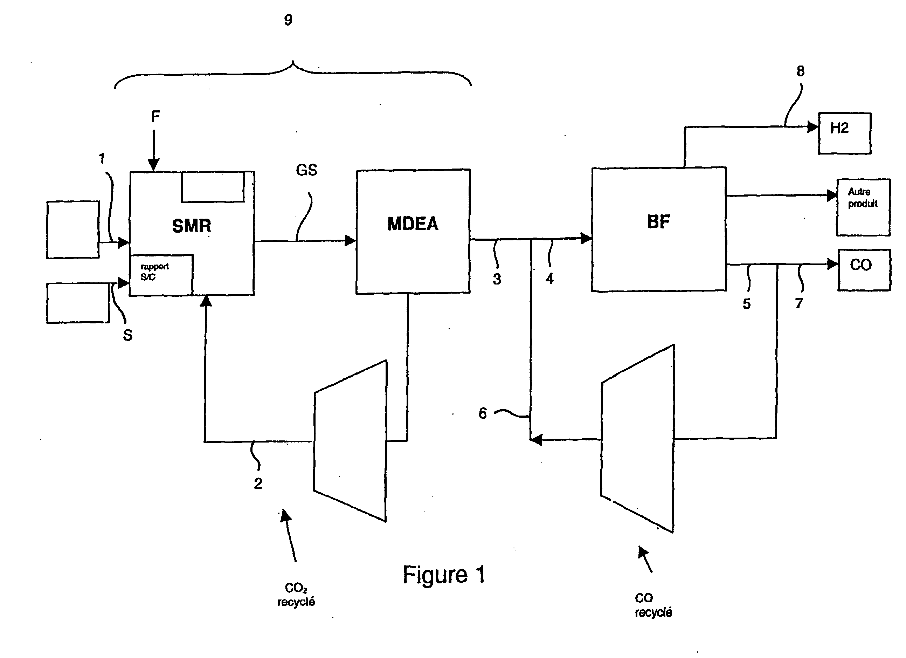

L'invention sera décrite en plus de détails en se référant à la Figure 1 qui est un dessin schématique d'un appareil selon l'invention.

La Figure 1 représente une installation selon l'invention comprenant un appareil de production de gaz de synthèse et un appareil de production de monoxyde de carbone et d'hydrogène. L'appareil de production 9 est constitué dans cet exemple par un reformeur de méthane à la vapeur SMR et un appareil d'épuration en CO2 MDEA qui sert à épurer le gaz de synthèse produit par le reformeur.

L'appareil de séparation (BF) de monoxyde de carbone et d'hydrogène peut fonctionner par distillation, par exemple par lavage au méthane, condensation partielle ou tout autre moyen connu.

Un débit de méthane 1 désigné débit d'alimentation est envoyé à un reformeur à vapeur de méthane SMR. Le reformeur SMR est également alimenté par un débit de vapeur d'eau S. Un débit de gaz de synthèse GS est produit par le reformeur SMR. Le reformage du méthane est une réaction endothermique, par conséquent il faut donner de l'énergie sous forme de chaleur pour chauffer le four.

Cette chaleur est apportée principalement par deux sources de carburant F:
- les gaz de purge de l'unité comme le résiduaire de PSA ou le gaz de flash de la boite froide
- le gaz naturel

Le gaz de synthèse GS est ensuite envoyé à un appareil d'épuration en CO₂ MDEA, qui opère par exemple selon le procédé méthanol di-éthanol amine ou par lavage au méthanol. Le reformeur SMR peut être remplacé dans appareil de production de gaz de synthèse 9 par un autre type d'appareil tel qu'un reformeur autothermique ou un appareil à oxydation partielle.

L'appareil d'épuration en C0₂ MDEA produit un débit de gaz de synthèse 3 dépourvu en CO₂ et un débit enrichi en C0₂ 2. Le débit enrichi en C0₂ 2 peut être recyclé vers le reformeur SMR après compression dans un compresseur.

Le débit 3 préalablement traité (par séchage et décarbonatation finale) est envoyé à une boîte froide BF où il est refroidi et séparé par distillation pour former un débit 5 riche en monoxyde de carbone, un débit 8 riche en hydrogène et éventuellement un mélange des deux composants (Oxogas, non-illustré) et/ou du méthane et/ou de l'azote. Une partie 7 du gaz 5 sert de produit riche en monoxyde de carbone.

Les principaux paramètres agissant sur la qualité et la quantité du gaz de synthèse 3 produit en sortie de l'appareil d'épuration MDEA sont :
- le rapport entre la vapeur et la quantité de carbone dans le carburant SIC (appelé communément rapport vapeur carbone)
- la température T de la réaction ou du four
- débit 2 du recyclage de CO₂
- débit 1 d'alimentation

A des fins de simplification, le raisonnement se fera à iso-pression.

Le tableau suivant indique les tendances majeures avec leurs effets sur la qualité et la quantité de production de gaz de synthèse 3 à la sortie de l'appareil d'épuration MDEA.

| S/C | T | Q recyclage CO₂ | Q Alimentation | Q Gaz de synthèse 3 produit | Rapport H2/CO dans le gaz de synthèse 3 produit | CH4 dans gaz de synthèse 3 produit |
|---|---|---|---|---|---|---|
| → | ↘ | → | → | → | ↗ | ↗ |
| → | ↗ | → | → | → | ↘ | ↘ |
| ↘ | → | → | → | → | ↘ | ↗ |
| ↗ | → | → | → | → | ↗ | ↘ |
| → | → | ↘ | → | → | ↗ | → |
| → | → | ↗ | → | → | ↘ | → |
| → | → | → | ↘ | ↘ | → | → |
| → | → | → | ↗ | ↗ | → | → |

Ainsi, si le rapport entre la vapeur et la quantité de carbone dans le carbone SIC est constant, la température T de la réaction ou du four augmente, alors que le débit 2 du recyclage de CO₂ et le débit d'alimentation 1 sont constants, le rapport H₂/CO dans le gaz de synthèse 3 baissera de même que la quantité de méthane dans le gaz de synthèse 3.

En modifiant le rapport entre la vapeur et la quantité de carbone dans le carbone SIC et/ou la température T de la réaction ou du four et/ou le débit du recyclage de CO₂ et/ou le débit d'alimentation, il est possible de modifier le rapport de H₂/CO dans le gaz de synthèse 3 produit et/ou la quantité de méthane dans le gaz de synthèse 3 produit, ainsi que le rapport C0₂/CO (non mentionné dans de tableau ci-dessus).

Le schéma ainsi que le tableau représenté ci-après décrivent le cas d'un appareil de production de H₂ et CO basé sur une reformeur SMR alimenté en gaz naturel 1, un appareil d'épuration MDEA pour séparer le CO₂, et une boite froide BF pour effectuer la séparation entre H₂ et CO et éventuellement d'autres composants par distillation cryogénique.

Seul le cas de recycle de CO est présenté mais il est possible d'y substituer ou d'y associer aussi un recycle d'hydrogène (non-illustré) et/ou d'oxogas.

Dans le cas présenté, la production de CO est réduite de 100 à 35%, tout en essayant de maintenir la production d'H₂ la plus élevée possible.

Dans le cas de base avec la production de CO correspondant à 100% (temps 1), les paramètres de réglage principaux sont les suivants :
- SIC du SMR = 1.5
- T four 950 °C
- Recycle de CO2 100 %
- Débit d'alimentation nominal du SMR = 100%

Pour ce cas, il n'y a aucun recyclage de monoxyde de carbone, d'hydrogène ou d'oxogas au niveau de la boîte froide.

Afin de réduire la production de CO, dans un premier temps (temps 2) le recyclage de CO₂ 2 est réduit, jusqu'à son arrêt complet (temps 3), avec un envoi simultané de monoxyde de carbone recyclé 6 d'en aval de la boite froide jusqu'en amont de la boîte froide pour être mélangé avec le gaz de synthèse 3. Le mélange est ensuite refroidi dans la boîte froide et séparé par distillation pour fournir les produits.

Aucun changement n'est fait sur les paramètres rapport SIC ou T four, seul le débit de d'alimentation 1 est réduit. On note ainsi une teneur en CO, H₂ et CH₄ constante pour le débit 4 envoyé dans la boîte froide, le débit traité 4 (constitué par le gaz de synthèse 3 mélangé avec le monoxyde de carbone recyclé 6) restant à peu près constant à l'entrée de la boite froide, alors que les teneurs en CO et H₂ du débit 3 à la sortie de la MDEA changent, donnant une réduction pour le contenu en CO et une augmentation pour le contenu en H₂, le débit produit par la MDEA changeant de façon marginale.

Dès que le recyclage de CO₂ est arrêté (temps 3), la réduction du débit de production de CO se poursuit en continuant d'augmenter le recyclage 6 de CO et en modifiant les autres paramètres tel que le rapport S/C et/ou la température du four et/ou le débit d'alimentation.

Les temps 4 à 7 représentent ces étapes supplémentaires.

On note ainsi une teneur en CO, H₂ et CH₄ à peu près constant du débit 4 à entrée de la boite froide BF par rapport au débit mesuré au temps 1, le débit traité baissant légèrement. Dans le même temps la teneur CO et H₂ et CH₄ du débit 3 ainsi que le débit 3 à la sortie de la MDEA changent, avec une réduction pour la teneur en CO et une augmentation pour les teneurs en H₂ et CH₄, le débit quant à lui diminue.

Le temps 8 est un point extrême où plus aucune modification (SIC, T four) n'est faite sur le reformeur à part la réduction du débit d'alimentation 1 ; conjointement le débit recyclé 6 de CO continu d'être augmenté afin de réduire la production.

L'installation selon invention comprend des moyens (non-illustrés) pour détecter la composition et le débit du au moins un gaz de recyclage 6 et du mélange d'alimentation 3. En les comparant, il est possible de régler le débit et la composition du mélange 4 rentrant dans l'unité de séparation, afin de permettre un fonctionnement stable même en cas de production basse.

L'installation comprend également des moyens (non-illustré) pour déclencher le recyclage du au moins un gaz de recyclage si le besoin de produit réduit en dessous d'un seuil et des moyens pour arrêter le recyclage du au moins un gaz de recyclage si le besoin du même produit augmente au delà d'un seuil (du seuil).

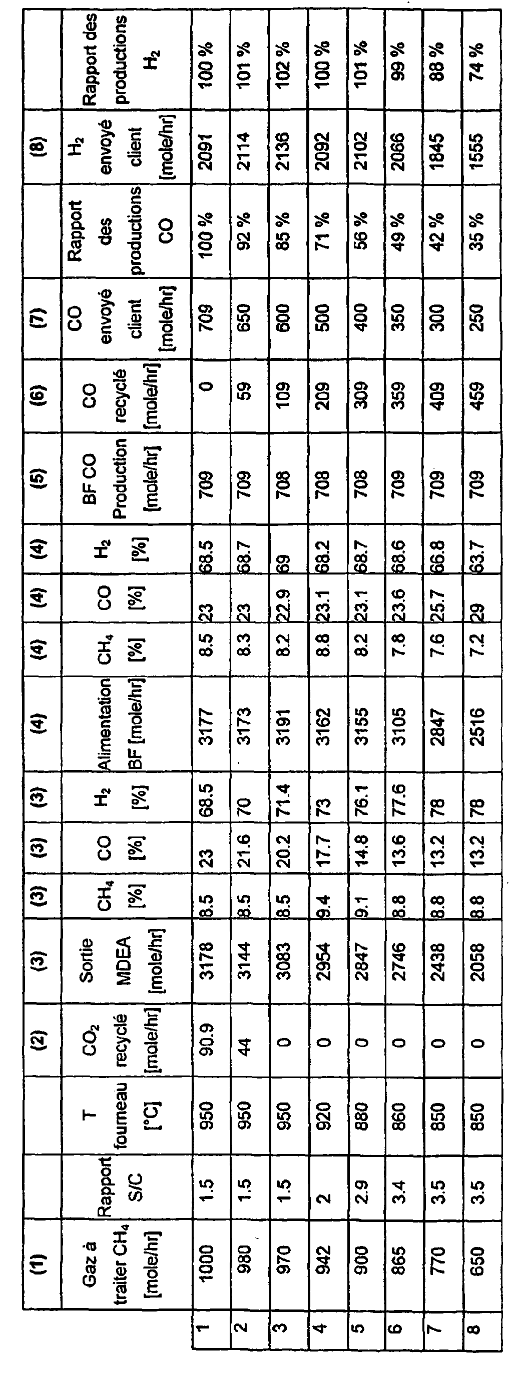

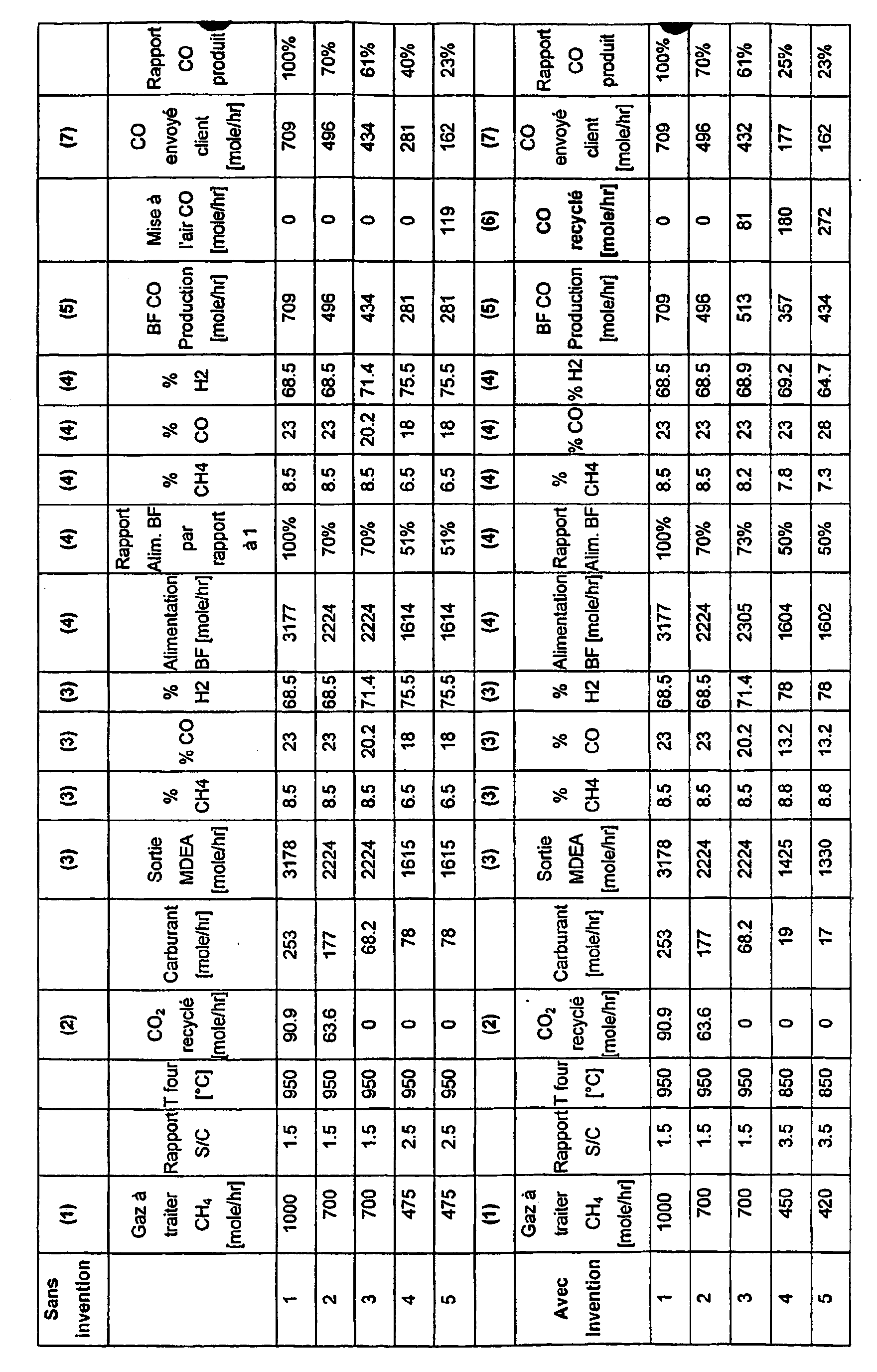

Le débit de carburant décrit correspond à la portion du gaz naturel qui sert au chauffage.

Sans l'invention, comme on le voit au point 5, on produit 23% du débit nominal, mais en mettant 119 mole/hr de CO à l'air, et en consommant 475 + 78 = 553 mole/hr de gaz naturel.

Avec l'invention au même point, on produit 23% du débit nominal, sans mettre à l'air et en consommant seulement 420 + 17 = 437 mole/hr de gaz naturel.

Par conséquent, à production égale vers le client avec invention, on consomme 26% de moins de CH₄ que sans l'invention.

## Revendications

1. Procédé pour la production de monoxyde de carbone et/ou d'hydrogène et/ou d'un mélange d'hydrogène et de monoxyde de carbone par distillation cryogénique comprenant les étapes de :
i) produire un mélange d'alimentation comprenant au moins du monoxyde de carbone et de l'hydrogène dans un appareil de production (9) ;
ii) séparer le mélange d'alimentation (3) comprenant au moins du monoxyde de carbone et de l'hydrogène par distillation cryogénique dans une unité de séparation (BF) comprenant au moins une colonne ;
iii) recueillir du monoxyde de carbone (7) et/ou de l'hydrogène (8) et/ou un mélange d'hydrogène et de monoxyde de carbone de l'unité de séparation ;
iv) selon un premier mode d'opération, envoyer une première quantité de mélange d'alimentation (3) à séparer à l'unité de séparation ;
v) selon le premier mode d'opération, produire une quantité d'un produit final pouvant être du monoxyde de carbone (7), de l'hydrogène (8) ou un mélange des deux ; **caractérisé en ce que** le procédé comprend les étapes de :
vi) selon un deuxième mode d'opération, envoyer une deuxième quantité de mélange d'alimentation (3) à séparer de l'appareil de production (9) à l'unité de séparation, réduite par rapport à celle envoyée pendant le premier mode d'opération ;
vii) selon le deuxième mode d'opération, produire une quantité du produit final (5, 8), réduite par rapport à celle produite pendant le premier mode d'opération ;
viii) selon le deuxième mode d'opération, dériver de l'unité de séparation au moins un gaz de recyclage (6) contenant du monoxyde de carbone et/ou de l'hydrogène et/ou du méthane et ayant une composition différente de celle de la composition du mélange d'alimentation envoyé à l'unité de séparation selon le premier mode d'opération et envoyer le au moins un gaz de recyclage à l'unité de séparation pour y être séparé et ;
ix) selon le deuxième mode d'opération, modifier le débit et la composition du mélange d'alimentation (3) produit par l'appareil de production en fonction du débit et de la composition du au moins un gaz de recyclage.

2. Procédé selon la revendication 1 dans lequel le mélange d'alimentation (3) contient jusqu'à 10 % molaires de méthane et/ou jusqu'à 10 % molaires d'azote et/ou jusqu'à 10 % molaires d'autres impuretés.

3. Procédé selon l'une des revendications 1 et 2 dans lequel un ou le gaz de recyclage (6) contient au minimum 5 % mol. de monoxyde de carbone.

4. Procédé selon l'une des revendications 1 et 2 dans lequel un ou le gaz de recyclage (6) contient au minimum 25% mol. d'hydrogène.

5. Procédé selon l'une des revendications précédentes dans lequel au moins un gaz de recyclage (6) est recyclé uniquement pendant le deuxième mode d'opération quand le besoin d'un des produits (7, 8) tombe en dessous d'un seuil.

6. Procédé selon l'une des revendications précédentes dans lequel la composition et/ou le débit du mélange d'alimentation produit par l'appareil de production (9) est modifiée pendant le deuxième mode d'opération de sorte que la composition en monoxyde de carbone de la deuxième quantité de mélange d'alimentation baisse si le gaz de recyclage (6) est plus riche en monoxyde de carbone que la première quantité de mélange d'alimentation (3) et/ou de sorte que la composition en monoxyde de carbone de la deuxième quantité de mélange d'alimentation augmente si le gaz de recyclage est moins riche en monoxyde de carbone que la première quantité de mélange d'alimentation.

7. Procédé selon l'une des revendications précédentes dans lequel la composition du mélange d'alimentation (3) produit par l'appareil de production (9) est modifiée pendant le deuxième mode d'opération de sorte que la composition en hydrogène de la deuxième quantité de mélange d'alimentation baisse si le gaz de recyclage est plus riche en hydrogène que la première quantité de mélange d'alimentation et/ou de sorte que la composition en hydrogène de la deuxième quantité de mélange d'alimentation augmente si le gaz de recyclage est moins riche en hydrogène que la première quantité de mélange d'alimentation.

8. Procédé selon l'une des revendications précédentes dans lequel la composition et/ou le débit du mélange d'alimentation produit par l'appareil de production (9) est modifiée pendant le deuxième mode d'opération de sorte que le débit du mélange d'alimentation rentrant dans l'unité de séparation ne diffère pas du débit envoyé pendant le premier mode de plus que 50%.

9. Procédé selon l'une des revendications précédentes dans lequel la composition et/ou le débit du mélange d'alimentation produit par l'appareil de production (9) est modifiée pendant le deuxième mode d'opération de sorte que la teneur en monoxyde de carbone du mélange d'alimentation rentrant dans l'unité de séparation ne diffère pas de la teneur en monoxyde de carbone du mélange d'alimentation rentrant dans l'unité de séparation (BF) envoyé pendant le premier mode de + ou - 5%.

10. Procédé selon l'une des revendications précédentes dans lequel la composition et/ou le débit du mélange d'alimentation produit par l'appareil de production (9) est modifiée pendant le deuxième mode d'opération de sorte que la teneur en hydrogène du mélange d'alimentation rentrant dans l'unité de séparation (BF) ne diffère pas de la teneur en hydrogène du mélange d'alimentation rentrant dans l'unité de séparation envoyé pendant le premier mode d'opération de + ou -10%.

11. Procédé selon l'une des revendications précédentes dans lequel la composition et/ou le débit du mélange d'alimentation produit par l'appareil de production (9) est modifiée pendant le deuxième mode d'opération en modifiant le fonctionnement de l'appareil de production.

12. Procédé selon la revendication 11 dans lequel on modifie le fonctionnement de l'appareil de production (9) par les moyens suivants :
i) en variant le rapport de vapeur carbone de l'alimentation de l'appareil de production dans le cas où l'appareil de production comprend un reformeur de méthane à la vapeur (SMR) et/ou
ii) en variant la température d'opération d'au moins un élément de l'appareil, éventuellement la température de réaction du reformeur (SMR) et/ou
iii) en variant le débit de dioxyde de carbone recyclé (2) d'un appareil d'épuration (MDEA) en dioxyde de carbone vers un reformeur (SMR) et/ou
iv) en variant un débit (1) alimentant l'appareil de production et/ou
vi) en variant le rapport oxygène / carbone de l'alimentation de l'appareil de production dans le cas où l'appareil de production fonctionne par oxydation partielle.

13. Installation de production d'hydrogène et/ou de monoxyde de carbone et/ou d'un mélange d'hydrogène et de monoxyde de carbone, par distillation cryogénique, d'un mélange d'alimentation contenant au moins du monoxyde de carbone et de l'hydrogène comprenant un appareil de production (9) pour produire le mélange d'alimentation (3), des moyens pour envoyer le mélange d'alimentation à une unité de séparation (BF), des moyens pour recueillir de l'hydrogène (8) et/ou du monoxyde de carbone (7) et/ou un mélange des deux dérivés de l'unité de séparation comme produit(s), des moyens pour dériver au moins un gaz de recyclage (6) de l'unité de séparation, des moyens pour envoyer le au moins un gaz de recyclage en amont de l'unité de séparation pour être séparé avec le mélange d'alimentation (3) provenant de l'appareil de production **caractérisé en ce que** l'installation comprend des moyens pour modifier le débit et la composition du mélange d'alimentation (3) en modifiant le fonctionnement de l'appareil de production (9) en fonction du débit et de la composition du au moins un gaz de recyclage (6).

14. Installation selon la revendication 13 comprenant des moyens pour détecter la composition et le débit du au moins un gaz de recyclage et du mélange d'alimentation.

15. Installation selon l'une des revendications 13 et 14 comprenant des moyens pour déclencher le recyclage du au moins un gaz de recyclage (6) si le besoin de produit (5, 8) réduit en dessous d'un seuil et des moyens pour arrêter le recyclage du au moins un gaz de recyclage si le besoin du même produit augmente au delà d'un seuil ou du seuil.

16. Installation selon l'une des revendications 13 à 15 dans laquelle l'unité de séparation (BF) contient une colonne de lavage au méthane et/ou une colonne de lavage à l'azote et/ou une colonne de lavage au monoxyde de carbone et/ou une colonne d'épuisement et/ou une colonne de distillation.

## Patentansprüche

1. Verfahren zur Produktion von Kohlenmonoxid und/oder Wasserstoff und/oder eines Gemischs von Wasserstoff und Kohlenmonoxid durch Tieftemperaturdestillation, das die folgenden Schritte umfasst:
i) Produzieren eines Einsatzgemischs, das mindestens Kohlenmonoxid und Wasserstoff umfasst, in einer Produktionsapparatur (9);
ii) Trennen des Einsatzgemischs (3), das mindestens Kohlenmonoxid und Wasserstoff umfasst, durch Tieftemperaturdestillation in einer Trenneinheit (BF) mit mindestens einer Säule;
iii) Sammeln des Kohlenmonoxids (7) und/oder des Wasserstoffs (8) und/oder eines Gemischs von Wasserstoff und Kohlenmonoxid aus der Trenneinheit;
iv) gemäß einer ersten Betriebsweise Zuführen einer ersten Menge des zu trennenden Einsatzgemischs (3) zur Trenneinheit;
v) gemäß einer ersten Betriebsweise Produzieren einer Menge eines Endprodukts, bei dem es sich um Kohlenmonoxid (7), Wasserstoff (8) oder ein Gemisch davon handeln kann;
**dadurch gekennzeichnet, dass** das Verfahren die folgenden Schritte umfasst:
vi) gemäß einer zweiten Betriebsweise Zuführen einer zweiten Menge des zu trennenden Einsatzgemischs (3) von der Produktionsapparatur (9) zur Trenneinheit, wobei die zweite Menge kleiner ist als die bei der ersten Betriebsweise zugeführte Menge;
vii) gemäß der zweiten Betriebsweise Produzieren einer Menge Endprodukt (5, 8), die kleiner ist als die bei der ersten Betriebsweise produzierte Menge;
viii) gemäß der zweiten Betriebsweise Abziehen mindestens eines Rückführungsgases (6), das Kohlenmonoxid und/oder Wasserstoff und/oder Methan enthält und eine andere Zusammensetzung aufweist als das der Trenneinheit gemäß der ersten Betriebsweise zugeführte Einsatzgemisch, aus der Trenneinheit und Zuführen von mindestens einem Rückführungsgas zu der Trenneinheit zwecks Trennung darin und
ix) gemäß der zweiten Betriebsweise Modifizieren der Durchflussrate und der Zusammensetzung des von der Produktionsapparatur produzierten Einsatzgemischs (3) in Abhängigkeit von der Durchflussrate und der Zusammensetzung des mindestens einen Rückführungsgases.

2. Verfahren nach Anspruch 1, bei dem das Einsatzgemisch (3) bis zu 10 Mol-% Methan und/oder bis zu 10 Mol-% Stickstoff und/oder bis zu 10 Mol-% andere Verunreinigungen enthält.

3. Verfahren nach einem der Ansprüche 1 und 2, bei dem ein bzw. das Rückführungsgas (6) mindestens 5 Mol-% Kohlenmonoxid enthält.

4. Verfahren nach einem der Ansprüche 1 und 2, bei dem ein bzw. das Rückführungsgas (6) mindestens 25 Mol-% Wasserstoff enthält.

5. Verfahren nach einem der vorhergehenden Ansprüche, bei dem man mindestens ein Rückführungsgas (6) nur bei der zweiten Betriebsweise zurückführt, wenn der Bedarf an einem der Produkte (7, 8) unter einen Schwellenwert fällt.

6. Verfahren nach einem der vorhergehenden Ansprüche, bei dem man die Zusammensetzung und/oder die Durchflussrate des durch die Produktionsapparatur (9) produzierten Einsatzgemischs bei der zweiten Betriebsweise derart modifiziert, dass der Kohlenmonoxidgehalt der zweiten Menge des Einsatzgemischs abnimmt, wenn das Rückführungsgas (6) kohlenmonoxidreicher ist als die erste Menge des Einsatzgemischs (3), und/oder derart, dass der Kohlenmonoxidgehalt der zweiten Menge des Einsatzgemischs zunimmt, wenn das Rückführungsgas kohlenmonoxidärmer ist als die erste Menge des Einsatzgemischs.

7. Verfahren nach einem der vorhergehenden Ansprüche, bei dem man die Zusammensetzung des durch die Produktionsapparatur (9) produzierten Einsatzgemischs (3) bei der zweiten Betriebsweise derart modifiziert, dass der Wasserstoffgehalt der zweiten Menge des Einsatzgemischs abnimmt, wenn das Rückführungsgas wasserstoffreicher ist als die erste Menge des Einsatzgemischs, und/oder derart, dass der Wasserstoffgehalt der zweiten Menge des Einsatzgemischs zunimmt, wenn das Rückführungsgas wasserstoffärmer ist als die erste Menge des Einsatzgemischs.

8. Verfahren nach einem der vorhergehenden Ansprüche, bei dem man die Zusammensetzung und/oder die Durchflussrate des durch die Produktionsapparatur (9) produzierten Einsatzgemischs bei der zweiten Betriebsweise derart modifiziert, dass sich die Durchflussrate des in die Trenneinheit eintretenden Einsatzgemischs um nicht mehr als 50% von der bei der ersten Betriebsweise zugeführten Durchflussrate unterscheidet.

9. Verfahren nach einem der vorhergehenden Ansprüche, bei dem man die Zusammensetzung und/oder die Durchflussrate des durch die Produktionsapparatur (9) produzierten Einsatzgemischs bei der zweiten Betriebsweise derart modifiziert, dass der Kohlenmonoxidgehalt des in die Trenneinheit eintretenden Einsatzgemischs sich nicht um ±5% von dem Kohlenmonoxidgehalt des bei der ersten Betriebsweise zugeführten, in die Trenneinheit (BF) eintretenden Einsatzgemischs unterscheidet.

10. Verfahren nach einem der vorhergehenden Ansprüche, bei dem man die Zusammensetzung und/oder die Durchflussrate des durch die Produktionsapparatur (9) produzierten Einsatzgemischs bei der zweiten Betriebsweise derart modifiziert, dass der Wasserstoffgehalt des in die Trenneinheit (BF) eintretenden Einsatzgemischs sich nicht um ±10% von dem Wasserstoffgehalt des bei der ersten Betriebsweise zugeführten, in die Trenneinheit eintretenden Einsatzgemischs unterscheidet.

11. Verfahren nach einem der vorhergehenden Ansprüche, bei dem man die Zusammensetzung und/oder die Durchflussrate des durch die Produktionsapparatur (9) produzierten Einsatzgemischs durch Modifizierung des Betriebs der Produktionsapparatur bei der zweiten Betriebsweise modifiziert.

12. Verfahren nach Anspruch 11, bei dem man den Betrieb der Produktionsapparatur (9) durch die folgenden Mittel modifiziert:
i) durch Variieren des Verhältnisses von Kohlenstoffdampf im Einsatz der Produktionsapparatur in dem Fall, dass die Produktionsapparatur einen Wasserdampf-Methan-Reformer (SMR) umfasst, und/oder
ii) durch Variieren der Betriebstemperatur mindestens eines Elements der Apparatur, gegebenenfalls der Reaktionstemperatur des Reformers (SMR), und/oder
iii) durch Variieren der Durchflussrate von zurückgeführtem Kohlendioxid (2) von einer Apparatur zur Entfernung (MDEA) von Kohlendioxid zu einem Reformer (SMR) und/oder
iv) durch Variieren einer Durchflussrate (1), die die Produktionsapparatur speist, und/oder
v) durch Variieren des Sauerstoff/Kohlenstoff-Verhältnisses des Einsatzes der Produktionsapparatur in dem Fall, dass die Produktionsapparatur mit Partialoxidation arbeitet.

13. Vorrichtung zur Produktion von Wasserstoff und/oder Kohlenmonoxid und/oder eines Gemischs von Wasserstoff und Kohlenmonoxid durch Tieftemperaturdestillation eines Einsatzgemischs, das mindestens Kohlenmonoxid und Wasserstoff umfasst, umfassend eine Produktionsapparatur (9) zur Produktion des Einsatzgemischs (3), Mittel zum Zuführen des Einsatzgemischs zu einer Trenneinheit (BF), Mittel zum Sammeln des Wasserstoffs (8) und/oder Kohlenmonoxids (7) und/oder eines Gemischs davon aus der Trenneinheit als Produkt(e), Mittel zum Abziehen mindestens eines Rückführungsgases (6) von der Trenneinheit, Mittel zum 2uführen mindestens eines Rückführungsgases stromaufwärts der Trenneinheit zum Trennen mit dem Einsatzgemisch (3) aus der Produktionsapparatur, **dadurch gekennzeichnet, dass** die Vorrichtung Mittel zum Modifizieren der Durchflussrate und der Zusammensetzung des Einsatzgemischs (3) durch Modifizierung des Betriebs der Produktionsapparatur (9) in Abhängigkeit von der Durchflussrate und der Zusammensetzung mindestens eines Rückführungsgases (6) umfasst.

14. Vorrichtung nach Anspruch 13, umfassend Mittel zum Detektieren der Zusammensetzung und der Durchflussrate mindestens eines Rückführungsgases und des Einsatzgemischs.

15. Vorrichtung nach einem der Ansprüche 13 und 14, umfassend Mittel zum Beginnen der Rückführung mindestens eines Rückführungsgases (6), wenn der Bedarf an Produkt (5, 8) unter einen Schwellenwert fällt, und Mittel zum Stoppen der Rückführung mindestens eines Rückführungsgases, wenn der Bedarf an ebendiesem Produkt über einen Schwellenwert bzw. den Schwellenwert steigt.

16. Vorrichtung nach einem der Ansprüche 13 bis 15, in der die Trenneinheit (BF) eine Methanwaschsäule und/oder eine Stickstoffwaschsäule und/oder eine Kohlenmonoxidwaschsäule und/oder eine Abtriebssäule und/oder eine Destillationssäule enthält.

## Claims

1. Method for producing carbon monoxide and/or hydrogen and/or a mixture of hydrogen and carbon monoxide by cryogenic distillation, comprising the steps of:
i) producing a feed mixture comprising at least carbon monoxide and hydrogen in a production apparatus (9);
ii) separating the feed mixture (3) comprising at least carbon monoxide and hydrogen by cryogenic distillation in a separating unit (CB) comprising at least one column;
iii) collecting carbon monoxide (7) and/or hydrogen (8) and/or a mixture of hydrogen and carbon monoxide from the separating unit;
iv) in a first operating mode, sending a first quantity of feed mixture (3) to be separated to the separating unit;
v) in the first operating mode, producing a quantity of end product that may be carbon monoxide (7), hydrogen (8) or a mixture thereof; **characterized in that** the method comprises the steps of:
vi) in a second operating mode, sending a second quantity of feed mixture (3) to be separated from the production apparatus (9) to the separating unit, a smaller quantity than the quantity sent in the first operating mode;
vii) in the second operating mode, producing a quantity of end product (5, 8), a smaller quantity than the quantity produced during the first operating mode;
viii) in the second operating mode, drawing off from the separating unit at least one recycle gas (6) containing carbon monoxide and/or hydrogen and/or methane and having a different composition from the composition of the feed mixture sent to the separating unit in the first operating mode, and sending the at least one recycle gas to the separating unit to be separated therein and;
ix) in the second operating mode, modifying the flow rate and composition of the feed mixture (3) produced by the production apparatus, according to the flow rate and composition of the at least one recycle gas.

2. Method as claimed in Claim 1, in which the feed mixture (3) contains up to 10 mol% of methane and/or up to 10 mol% of nitrogen and/or up to 10 mol% of other impurities.

3. Method as claimed in either of Claims 1 and 2, in which one or the recycle gas (6) contains at least 5 mol% of carbon monoxide.

4. Method as claimed in either of Claims 1 and 2, in which one or the recycle gas (6) contains at least 25 mol% of hydrogen.

5. Method as claimed in one of the preceding claims, in which at least one recycle gas (6) is recycled only during the second operating mode when the need of one of the products (7, 8) falls below a threshold.

6. Method as claimed in one of the preceding claims, in which the composition and/or flow rate of the feed mixture produced by the production apparatus (9) is modified during the second operating mode so that the carbon monoxide content of the second quantity of feed mixture decreases if the recycle gas (6) is richer in carbon monoxide than the first quantity of feed mixture (3) and/or so that the carbon monoxide content of the second quantity of feed mixture increases if the recycle gas is less rich in carbon monoxide than the first quantity of feed mixture.

7. Method as claimed in one of the preceding claims, in which the composition of the feed mixture (3) produced by the production apparatus (9) is modified during the second operating mode so that the hydrogen content of the second quantity of feed mixture decreases if the recycle gas is richer in hydrogen than the first quantity of feed mixture and/or so that the hydrogen content of the second quantity of feed mixture increases if the recycle gas is less rich in hydrogen than the first quantity of feed mixture.

8. Method as claimed in one of the preceding claims, in which the composition and/or flow rate of the feed mixture produced by the production apparatus (9) is modified during the second operating mode so that the flow rate of the feed mixture entering the separating unit does not differ by more than 50% from the flow rate sent during the first mode.

9. Method as claimed in one of the preceding claims, in which the composition and/or flow rate of the feed mixture produced by the production apparatus (9) is modified during the second operating mode so that the carbon monoxide content of the feed mixture entering the separating unit does not differ by ±5% from the carbon monoxide content of the feed mixture entering the separating unit (CB) sent during the first mode.

10. Method as claimed in one of the preceding claims, in which the composition and/or flow rate of the feed mixture produced by the production apparatus (9) is modified during the second operating mode so that the hydrogen content of the feed mixture entering the separating unit (CB) does not differ by ±10% from the hydrogen content of the feed mixture entering the separating unit sent during the first mode.

11. Method as claimed in one of the preceding claims, in which the composition and/or flow rate of the feed mixture produced by the production apparatus (9) is modified during the second operating mode by modifying the operation of the production apparatus.

12. Method as claimed in Claim 11, in which the operation of the production apparatus (9) is modified by the following means:
i) by varying the ratio of carbon vapor in the feed to the production apparatus if the production apparatus comprises a steam methane reformer (SMR) and/or
ii) by varying the operating temperature of at least one component of the apparatus, optionally the reaction temperature of the reformer (SMR) and/or
iii) by varying the flow rate of recycled carbon dioxide (2) from a carbon dioxide stripper (MDEA) to a reformer (SMR) and/or
iv) by varying the flow rate (1) feeding the production apparatus and/or
v) by varying the oxygen/carbon ratio of the feed to the production apparatus if the production apparatus operates by partial oxidation.

13. Installation for producing hydrogen and/or carbon monoxide and/or a mixture of hydrogen and carbon monoxide by cryogenic distillation of a feed mixture containing at least carbon monoxide and hydrogen, comprising a production apparatus (9) for producing the feed mixture (3), means for sending the feed mixture to a separating unit (CB), means for collecting hydrogen (8) and/or carbon monoxide (7) and/or a mixture of both, drawn off as product(s) from the separating unit, means for drawing off at least one recycle gas (6) from the separating unit, means for sending the at least one recycle gas upstream of the separating unit to be separated with the feed mixture (3) issuing from the production apparatus, **characterized in that** the installation comprises means for modifying the flow rate and composition of the feed mixture (3) by modifying the operation of the production apparatus (9) according to the flow rate and composition of the at least one recycle gas (6).

14. Installation as claimed in Claim 13, comprising means for detecting the composition and flow rate of the at least one recycle gas and of the feed mixture.

15. Installation as claimed in either of Claims 13 and 14, comprising means for initiating the recycling of the at least one recycle gas (6) if the need of product (5, 8) falls below a threshold, and means for stopping the recycling of the at least one recycle gas if the need of the same product increases above a or the threshold.

16. Installation as claimed in one of Claims 13 to 15, in which the separating unit (CB) contains a methane scrubbing column and/or a nitrogen scrubbing column and/or a carbon monoxide scrubbing column and/or a stripping column and/or a distillation column.
